(19) Europäisches Patentamt
European Patent Office
Office européen des brevets

(11) **EP 1 146 732 B1**

(12) **FASCICULE DE BREVET EUROPEEN**

(45) Date de publication et mention
de la délivrance du brevet:
**21.10.2009 Bulletin 2009/43**

(51) Int Cl.:
**H04N 5/217** *(2006.01)*

(21) Numéro de dépôt: **01400894.0**

(22) Date de dépôt: **06.04.2001**

(54) **Dispositif de conversion d'un photosignal en tension dans les senseurs d'images à intégrateurs déportés**

Photosignal-Spannungswandlerschaltung in Bildsensoren mit entfernten Integratoren

Photosignal to voltage conversion device in image sensors with offset integrators

(84) Etats contractants désignés:
**DE GB IT**

(30) Priorité: **10.04.2000 FR 0004562**

(43) Date de publication de la demande:
**17.10.2001 Bulletin 2001/42**

(73) Titulaire: **COMMISSARIAT A L'ENERGIE ATOMIQUE**
**75015 Paris (FR)**

(72) Inventeurs:
• **Pantigny, Philippe**
**38640 Claix (FR)**
• **Audebert, Patrick**
**38100 Grenoble (FR)**
• **Mottin, Eric**
**38950 Saint-Martin-le Vinoux (FR)**
• **Rothan, Frédéric**
**38170 Seyssinet (FR)**

(74) Mandataire: **Simonnet, Christine**
**c/o Brevatome,**
**3, rue du Docteur Lancereaux**
**75008 Paris (FR)**

(56) Documents cités:
**FR-A- 2 736 782**

• **PATENT ABSTRACTS OF JAPAN vol. 012, no. 189 (E-616), 2 juin 1988 (1988-06-02) & JP 62 292081 A (SEIKO EPSON CORP), 18 décembre 1987 (1987-12-18)**
• **PATENT ABSTRACTS OF JAPAN vol. 011, no. 384 (E-565), 15 décembre 1987 (1987-12-15) & JP 62 149256 A (SEIKO EPSON CORP), 3 juillet 1987 (1987-07-03)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

<u>Domaine de l'invention</u>

L'invention concerne un dispositif pour convertir un photosignal en tension dans des senseurs d'images à intégrateurs déportés.

D'une façon générale, l'invention trouve des applications dans le domaine de l'imagerie et, notamment, dans les dispositifs de prise d'images utilisant des senseurs d'images matricielles à intégrateurs déportés pour convertir, en signaux électriques, les rayonnements électromagnétiques reçus par les photodétecteurs des dispositifs de prise d'images.

Plus particulièrement, l'invention peut être appliquée à l'imagerie sous faible flux et/ou à faible temps d'intégration.

<u>Etat de la technique</u>

Il existe actuellement plusieurs types de senseurs d'images permettant de convertir des rayonnements électromagnétiques en signaux électriques. Généralement, les senseurs d'images comportent des photodétecteurs qui transforment les rayonnements électromagnétiques en photosignaux. Ces derniers sont ensuite transformés en signaux électriques au moyen d'un circuit intégré de lecture (appelé aussi CIL), qui comporte des fonctions analogiques et/ou digitales.

Dans ce type de senseurs, les photodétecteurs peuvent être réalisés au sein même du circuit intégré de lecture ; c'est le cas, en particulier, lorsque les photodétecteurs sont réalisés par des photodiodes ou des photogrilles de transistors CMOS opérant dans la bande spectrale visible. Ce cas est décrit notamment dans l'article intitulé « Comparison of passive and active pixel schemmes for CMOS visible imagers » de KOZLOWSKI, KLEINHANS et LIU, SPIE conference on infrared readout electronics IV, Orlando, Floride, Avril 1998.

Les photodétecteurs peuvent aussi être fabriqués directement sur le circuit de lecture, comme c'est le cas lorsque les photodétecteurs sont des microbolomètres résistifs opérant dans la gamme spectrale infrarouge. Ils peuvent également être réalisés dans une filière technologique spécifique ; c'est le cas notamment lorsque les photodétecteurs sont des photodiodes en HgCdTe. Dans ce cas, la matrice de photodétecteurs est hybridée par microbilles sur le circuit intégré de lecture. Ces deux cas sont décrits dans l'article intitulé « Le développement des technologies infrarouges futures au LIR » de TISSOT et BERTRAND, Colloque international Optronique et Défense, Décembre 1996, Montigny-le-Bretonneux, France.

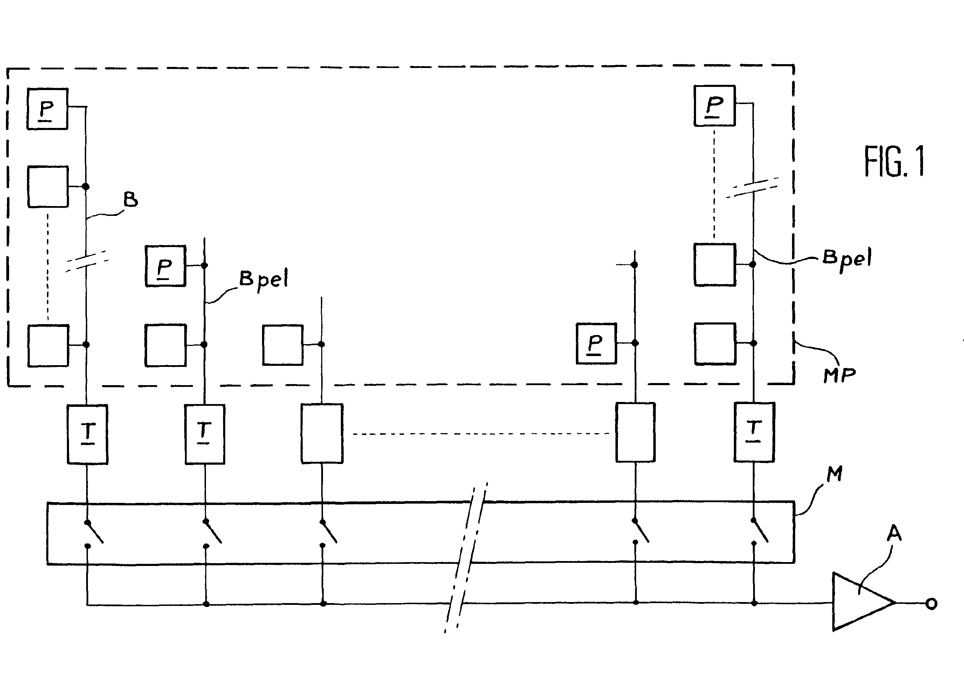

Pour une meilleure compréhension du domaine de l'invention, on a représenté, sur la figure 1, le synoptique d'un circuit intégré de lecture (CIL) classique.

Sur la figure 1, on a représenté, par la référence P, les points élémentaires (PEL) implantés chacun dans les pas des photodétecteurs et reliés par des bus, référencés Bpel. L'ensemble de ces points élémentaires et de ces bus Bpel forme une matrice de points élémentaires, appelée matrice PEL et référencée MP.

Chaque PEL de la matrice MP assure, d'une part, le couplage du photodétecteur et, d'autre part, une première conversion du photosignal en une grandeur électrique (courant, charge ou tension).

Classiquement, chaque rangée de PEL est connectée à son extrémité à des moyens de traitement déporté, référencés T.

Ces moyens de traitement déporté T assurent le traitement des signaux électriques obtenus en sortie de chaque rangée de la matrice MP et, plus précisément, la transformation du signal délivré par chaque PEL de la matrice en échantillons de tension multiplexables vers un montage de sortie. Ce montage de sortie consiste en un multiplexeur M, généralement de type analogique, qui reçoit les signaux provenant de chaque moyen de traitement déporté et assure le multiplexage de ces signaux. Si le circuit intégré de lecture CIL comporte plusieurs matrices de PEL, alors le ou les multiplexeur(s) M assure(nt) le multiplexage des sorties de toutes les matrices de PEL. Le ou les multiplexeur(s) est (sont) lui-même(eux-mêmes) connecté(s) à un ou des amplificateur(s) de sortie A.

Les moyens de traitement déporté peuvent être réalisés à partir d'un intégrateur, c'est-à-dire d'un amplificateur contre-réactionné par un condensateur et un interrupteur, qui assure la conversion en tension du photosignal délivré par le PEL sous la forme soit d'un courant soit d'une charge électrique.

Il existe deux catégories de circuits intégrés de lecture (CIL) à traitement déporté : les CIL dont l'intégrateur du bloc de traitement déporté procède à l'intégration du courant de sortie du PEL et les CIL dont l'intégrateur assure la conversion en tension de la charge intégrée dans le PEL.

Ces deux types de CIL sont décrits dans la demande de brevet FR-A-2 736 782 et représentés schématiquement sur la figure 2. On voit en effet sur cette figure 2 que, quelquesoit le type de CIL, les sorties des points élémentaires (PEL) d'une même rangée sont connectées à l'entrée de l'intégrateur I, au moyen du point de connexion BUS/PEL, référencé X.

La capacité ramenée sur l'entrée de l'intégrateur I, lors de la phase de lecture de chaque PEL, est alors égale à la somme de la capacité de sortie du PEL adressé (noté P1), des capacités de sortie des PEL non adressés (notés P2) et de la capacité de la connexion $C_{x-bus}$ utilisée pour assurer la continuité électrique entre les sorties de tous les PEL et l'entrée de l'intégrateur I. En d'autres termes, la capacité de sortie d'un PEL adressé correspond à la capacité de l'interrupteur d'adressage à l'état fermé et la capacité de sortie d'un PEL non adressé correspond à la capacité de l'interrupteur d'adressage à l'état ouvert.

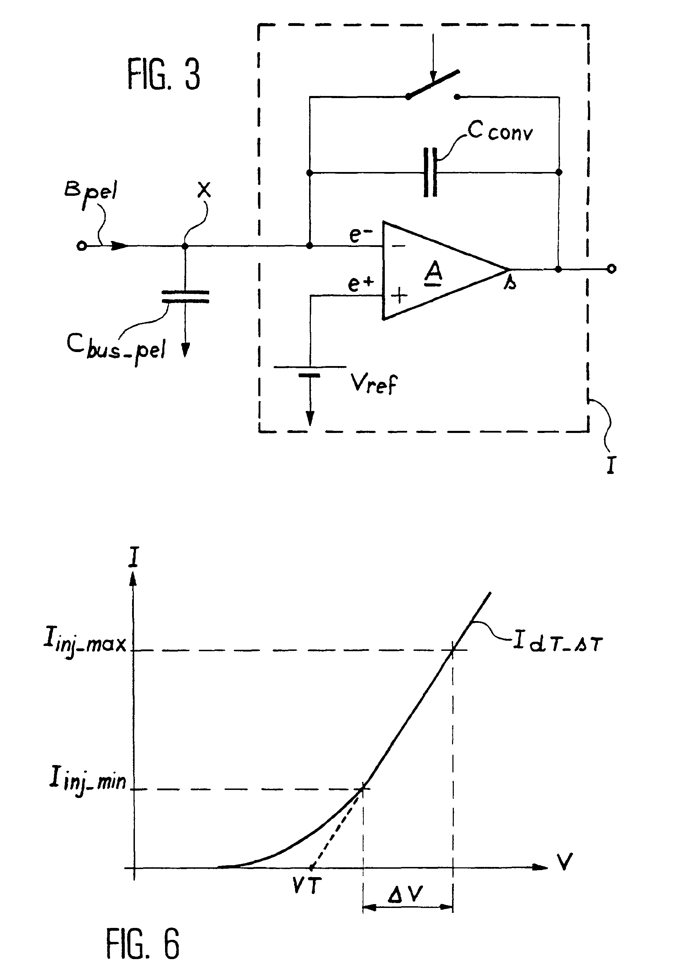

Outre les capacités ramenées sur l'entrée de l'intégrateur lors de la phase de lecture de chaque PEL, ces intégrateurs déportés présentent des bruits de conversion importants. Ces bruits de conversion, c'est-à-dire les bruits en sortie de l'intégrateur, à charge ou à courant d'entrée nul, proviennent de deux sources indépendantes : le bruit propre de l'amplificateur et le bruit de la source de tension de référence. Pour mieux comprendre l'origine de ces bruits, nous avons représenté, sur la figure 3, le schéma électrique équivalent d'un intégrateur déporté conventionnel. Sur ce schéma, Vref est la tension de référence de la source de tension continue, connectée sur l'entrée e+ d'un amplificateur A ; e- est l'entrée négative de l'amplificateur A sur laquelle est connecté le bus PEL (référencé Bpel) ; Cconv est la capacité de conversion connectée entre la sortie s de l'amplificateur A et l'entrée e- de cet amplificateur ; et Cbus_pel est la capacité du bus PEL.

Ainsi, vu de la sortie de l'intégrateur, les sources de bruits, qui viennent d'être citées, sont amplifiées du gain capacitif du montage de type non-inverseur qui réalise l'intégrateur. Plus précisément, la densité spectrale de la tension du bruit de conversion en sortie de l'intégrateur a donc pour expression, en fonction de la fréquence :

$$vbs\_conv(f) = \frac{Cbus\_pel + Cconv}{Cconv} \, x\sqrt{(vb\_ampli(f))^2 + (vb\_ref(f))^2}$$

En intégrant cette équation dans le domaine des fréquences, on obtient l'expression de la valeur efficace de la tension du bruit de conversion en sortie <vbbs_conv>, en fonction de la valeur efficace de la tension de bruit blanc d'entrée de l'amplificateur <vbb_ampli> et de la valeur efficace du bruit blanc de la tension de référence <vbb_ref> :

$$< vbbs\_conv > = \sqrt{\frac{Cbus\_pel + Cconv}{Cconv}} \, x\sqrt{< vbb\_ampli >^2 + < vbb\_ref >^2}$$

Cette dernière expression montre que le bruit de conversion d'un intégrateur déporté est une fonction croissante du bruit de l'amplificateur, du bruit de la tension de référence, de la capacité du bus PEL et de l'inverse de la capacité du condensateur de conversion.

Les relations qui rendent compte des composantes de bruit basse fréquence, caractéristiques des amplificateurs CMOS et de la fonction de transfert réelle de l'amplificateur, sont relativement complexes ; aussi, pour des raisons de simplification, les composantes très basses fréquences ont été assimilées à des niveaux quasi-continus. Ces derniers sont donc amplifiés par le gain du montage non-inverseur. Ainsi, la fourchette d'estimation du bruit de conversion en sortie d'un intégrateur déporté conventionnel est la suivante :

$$\left(\frac{Cbus\_pel + Cconv}{Cconv}\right)^{0.5} \Bigg|_{\substack{bruit \\ blanc}} \leq \frac{\langle vbbs\_conv \rangle}{\sqrt{\langle vbb\_ampli \rangle^2 + \langle vbb\_ref \rangle^2}} \leq \left(\frac{Cbus\_pel + Cconv}{Cconv}\right)^{1.0} \Bigg|_{\substack{bruit \\ 1/f}}$$

Cette expression montre les relations entre les contributeurs au bruit de conversion et la sensibilité du bruit de conversion à ces contributeurs.

Or, dans un senseur à intégrateur déporté, classique, pour un format du senseur donné ou pour un pas de PEL donné, si l'on augmente le nombre de PEL, alors la capacité du bus PEL augmente. Et, d'après la formule précédente, si le pas du PEL et le format du senseur augmente, alors le bruit de conversion augmente aussi, puisqu'il dépend de la capacité du bus PEL.

Par ailleurs, les exigences relatives au senseur étant de plus en plus nombreuses, cela nécessite d'intégrer un nombre de plus en plus important de fonctions au sein d'un PEL. Ainsi, le dessin des blocs fonctionnels supplémentaires dans la surface réduite d'un PEL accroît la densité d'intégration intra PEL et le nombre d'entrées et de sorties du PEL. Les contraintes de routage des interconnexions intra et inter PEL augmentent les couplages capacitifs avec le bus PEL (condensateurs parasites des interconnexions se chevauchant et couplage par influence entre conducteurs parallèles). Ces capacités parasites augmentent la capacité du bus PEL et, par conséquent, le bruit de conversion augmente.

D'autre part, la capacité de sortie d'un PEL ne peut pas toujours être minimisée dans le but de diminuer le bruit de conversion. En effet, la réduction de la résistance à l'état passant de l'interrupteur d'adressage nécessite, par exemple, d'augmenter la largeur du canal du transistor TMOS d'adressage. Or, cela a pour effet d'augmenter sa capacité grille-source, ainsi que la capacité de sa jonction connectée au bus PEL. De même, lorsqu'on est amené à réaliser l'interrupteur d'adressage par la mise en parallèle d'un transistor NMOS et d'un transistor PMOS, la capacité de sortie du PEL augmente par le même mécanisme que décrit précédemment. Aussi, dans ces deux cas, la capacité de sortie du PEL, quelle soit adressée ou non adressée, augmente. Et, par conséquent, la capacité du bus PEL augmente.

Par ailleurs, dans certains cas, il est nécessaire d'augmenter la réponse en tension, obtenue en sortie de l'intégrateur déporté. C'est le cas, par exemple, lorsque l'on veut utiliser une capacité de conversion de faible valeur pour convertir en tension, de manière optimale, une photocharge de faible valeur, ou bien lorsque l'on veut intégrer un photocourant pendant un temps réduit, ou encore lorsque l'on veut intégrer un courant d'entrée faible. C'est aussi le cas, lorsque l'on veut réduire les exigences sur le bruit d'entrée des blocs analogiques implantés en aval de l'intégrateur déporté ou bien augmenter l'immunité au bruit du signal de sortie du CIL ou encore réduire la complexité des chaînes d'acquisition du signal de sortie, etc.. Dans tous ces cas, la réponse en tension peut être augmentée en diminuant la capacité du condensateur de conversion, mais cela induit, d'après les explications données précédemment, une augmentation du bruit de conversion.

Par ailleurs, la formule donnant la densité spectrale $V_{bs\text{-}conv}$ montre que le bruit de la tension de référence est amplifié par une fonction croissante du rapport Cbus_pel/Cconv. L'obtention d'un bruit de conversion faible reporte des contraintes fortes sur la réalisation de l'alimentation lorsque le rapport Cbus_pel/Cconv est défavorable. Outre le fait qu'il faille générer une alimentation très faible bruit, son « routage » doit faire l'objet de précautions particulières si l'on veut garantir ce niveau de bruit sur l'entrée e+ de tous les intégrateurs déportés du circuit intégré de lecture.

Cette formule montre également que le bruit propre de l'amplificateur A de l'intégrateur déporté est amplifié par la fonction croissante du rapport Cbus_pel/Cconv. L'obtention d'un bruit de conversion faible reporte des contraintes fortes sur la conception de l'amplificateur et de ses stimuli lorsque le rapport Cbus_pel/Cconv est défavorable car il faut agir à plusieurs niveaux, à savoir : réduire la composante de bruit due au transistor TMOS de l'amplificateur, alimenter l'amplificateur avec des alimentations bas bruits et sélectionner un schéma d'amplificateur présentant une très bonne réjection d'alimentation. Or, ceci est d'autant plus difficile à réaliser que le pas du PEL est réduit, car on dispose alors de moins de degrés de liberté pour optimiser les géométries des transistors TMOS et leur placement.

Les documents Patent Abstract of Japan, vol. 012, n° 189 (E-616), 2 juin 1988 (1988-06-02) et vol. 11, n° 384 (E-565), 15 décembre 1987 (1987-12-15) divulguent chacun un senseur d'images avec des photodétecteurs reliés à un miroir de courant, ce qui permet une lecture d'un signal stable et à grande vitesse.

Exposé de l'invention

L'invention a pour but de remédier aux inconvénients des senseurs d'images à intégrateurs déportés, décrits précédemment. A cette fin, elle propose un dispositif de conversion d'un photosignal en tension, utilisable dans les senseurs d'images à intégrateurs déportés et présentant un bruit de conversion réduit.

Selon l'invention, le bruit de conversion peut être diminué si l'on réduit de manière significative la capacité ramenée sur l'entrée de l'intégrateur déporté, sans altérer la fonction de transfert du photosignal en tension. Ceci est réalisé en insérant, entre l'extrémité du bus PEL (utilisé pour multiplexer les sorties des points élémentaires d'une même rangée) et l'entrée de l'intégrateur, un dispositif d'adaptation d'impédance de faible capacité de sortie.

De façon plus précise, l'invention concerne un senseur d'images à lecture matricielle selon la revendication 1. Il comporte une matrice de photodétecteurs élémentaires connectés par au moins un bus PEL à un intégrateur déporté convertissant le signal de chaque photodétecteur élémentaire en tension, Entre l'extrémité du bus PEL et l'entrée de l'intégrateur, se trouve un dispositif d'adaptation d'impédance à faible capacité de sortie, délivrant à sa sortie, pendant le temps de conversion d'un signal de photodétecteur, une variation de charge qui correspond à une fonction affine (c'est-à-dire une variation monotone de la fonction d'entrée) de la charge présente à l'entrée dudit dispositif d'adaptation.

La variation de charge peut être déterminée par :

$$\int_{t=0}^{t=Tconv} Iinj(t).dt = \int_{t=0}^{t=Tconv} Iint(t).dt$$

où Iinj est le courant instantané du bus injecté à l'entrée du dispositif d'adaptation, Iint est le courant instantané en sortie du dispositif d'adaptation et Tconv est le temps de conversion.

Avantageusement, le dispositif d'adaptation d'impédance est connecté le plus près possible de l'entrée de l'intégrateur.

De préférence, le dispositif d'adaptation d'impédance est un transistor TMOS monté en grille commune sur l'entrée de l'intégrateur.

Selon un mode de réalisation de l'invention, le dispositif d'adaptation d'impédance comporte un transistor TMOS à grille commune associé à un amplificateur de contre-réaction.

Selon un autre mode de réalisation, le dispositif d'adaptation d'impédance comporte deux transistors et deux sources de tension montés en miroir de courant.

Brève description des figures

- La figure 1 représente le synoptique d'un circuit intégré de lecture classique ;

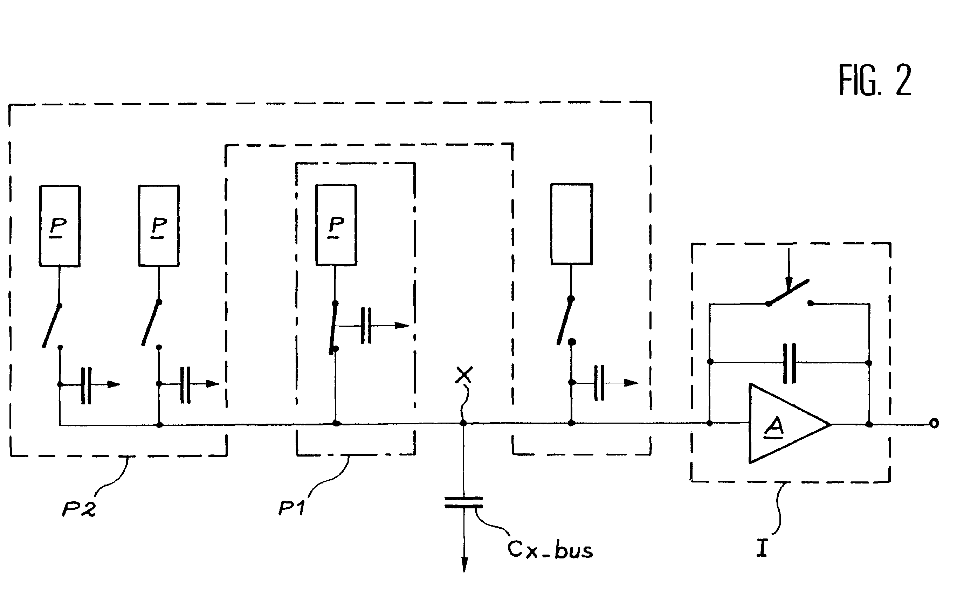

- la figure 2 représente le schéma électrique d'une rangée de PEL dans un CIL classique ;
- la figure 3 représente le schéma électrique d'un intégrateur déporté classique ;
- la figure 4 représente le schéma de principe d'un circuit intégré de lecture, selon l'invention ;
- la figure 5 représente le schéma électrique du mode de réalisation préféré de l'invention ;
- la figure 6 représente schématiquement la courbe de variation du potentiel du bus PEL en fonction du courant injecté dans le transistor TMOS ;
- la figure 7 représente schématiquement la réponse du transistor TMOS à un échelon de courant ;
- la figure 8 représente le schéma électrique d'un mode de réalisation du dispositif de l'invention ; et
- la figure 9 représente le schéma électrique d'un autre mode de réalisation du dispositif de l'invention.

Description de modes de réalisation de l'invention

L'invention concerne un senseur d'images à intégrateur déporté, dans lequel le bruit de conversion est réduit. Cette réduction du bruit de conversion est obtenue en introduisant, entre l'extrémité du bus PEL et l'entrée de l'intégrateur déporté, un dispositif d'adaptation d'impédance de faible capacité de sortie, qui permet de réduire, de façon significative, la capacité ramenée sur l'entrée de l'intégrateur déporté, sans altérer la fonction de transfert de photosignal en tension.

Avantageusement, le dispositif d'adaptation d'impédance est inséré le plus près possible de l'entrée de l'intégrateur déporté, ce qui permet d'obtenir la meilleure performance possible, c'est-à-dire de minimiser la capacité en sortie de l'intégrateur. Idéalement, ce dispositif d'adaptation d'impédance devrait présenter les caractéristiques suivantes :

- il devrait avoir une capacité de sortie Cs faible comparativement à la capacité du bus PEL ; et
- sa sortie devrait délivrer, à l'entrée de l'intégrateur, un courant instantané strictement égal au courant instantané injecté à son entrée.

Or, cette dernière caractéristique est trop restrictive pour permettre une mise en oeuvre aisée du dispositif. L'invention propose donc de sélectionner un dispositif d'adaptation d'impédance qui respecte la conservation de la charge entre son entrée et sa sortie pour ne pas altérer le processus de conversion, en tension, du photosignal délivré par le PEL.

Autrement dit, tout dispositif d'adaptation en impédance peut être utilisé dès lors qu'il présente une faible capacité de sortie, et qu'il délivre, sur son noeud électrique de sortie, pendant un temps Tconv égal à la durée de la conversion du photosignal en tension, une variation de charge strictement égale à celle développée sur son noeud d'entrée.

Cette variation de charge est une fonction affine de la variation de charge injectée à son entrée ; elle est donnée par l'expression :

$$\int_{t=0}^{t=Tconv} Iinj(t).dt = \int_{t=0}^{t=Tconv} Iint(t).dt,$$

où Iint(t) est le courant instantané à l'entrée de l'intégrateur.

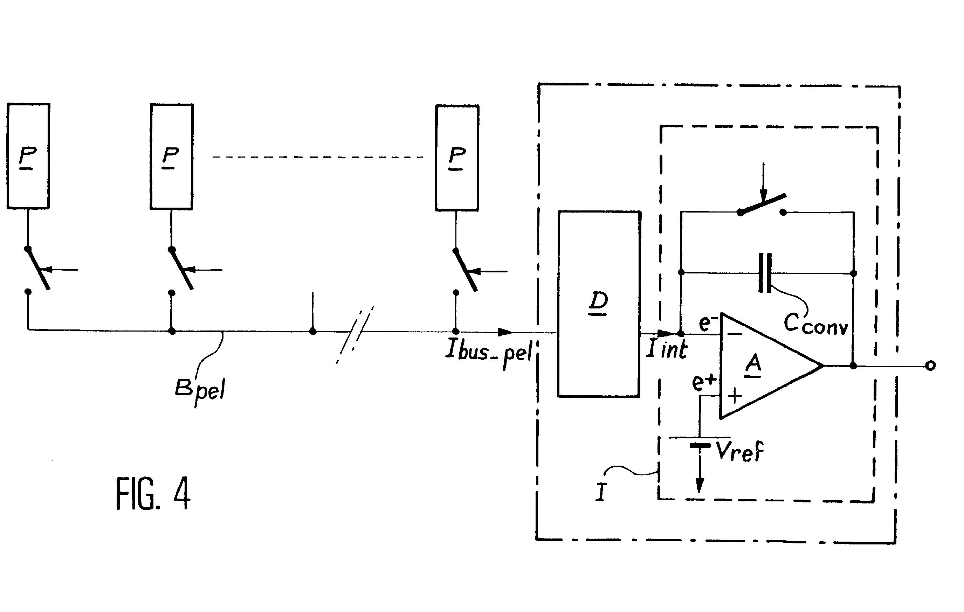

Sur la figure 4, on a représenté schématiquement le circuit intégré de lecture d'un senseur d'images à intégrateur déporté, selon l'invention. Comme sur les figures précédentes, les points élémentaires ont été référencés P et le bus PEL de liaison de chaque rangée de points élémentaires P est référencé Bpel. Ce bus Bpel est connecté, à une de ses extrémités (appelée par la suite « extrémité »), à un dispositif d'adaptation d'impédance D, lui-même connecté sur l'entrée d'un intégrateur I.

L'intégrateur I peut être le même que celui utilisé dans l'art antérieur et représenté sur la figure 3.

Le dispositif d'adaptation d'impédance D peut être réalisé selon plusieurs modes de réalisation différents.

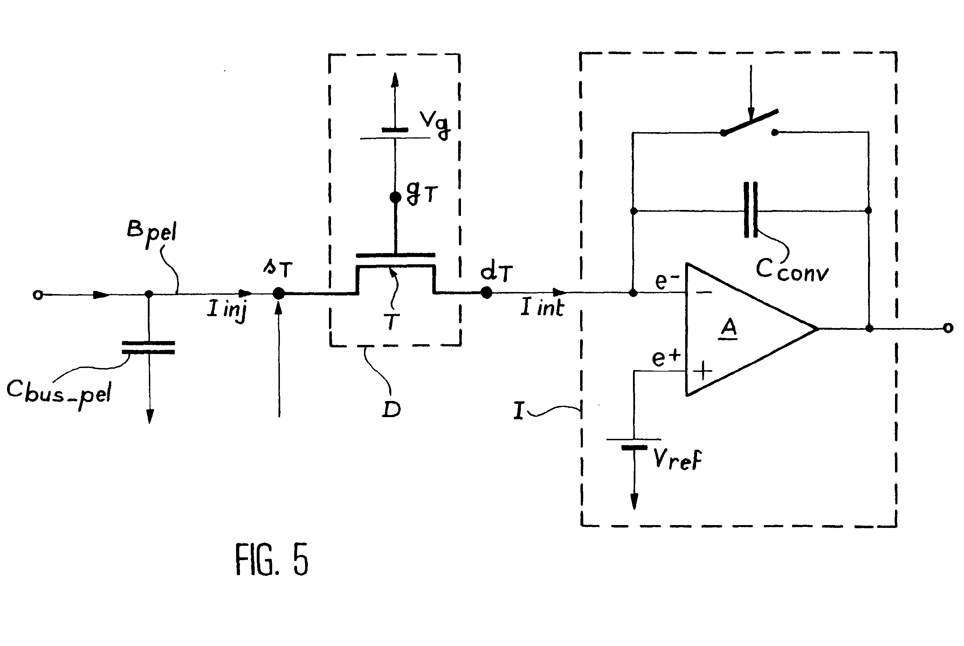

Selon l'un de ces modes de réalisation, le dispositif d'adaptation d'impédance est réalisé par un transistor TMOS monté en grille commune sur l'intégrateur. Ce mode de réalisation est représenté sur la figure 5.

Sur cette figure 5, on a référencé T le transistor TMOS avec sa grille $g_T$, sa source $s_T$, et son drain $d_T$. La source $s_T$ du transistor T est connectée à l'extrémité du bus PEL ; le drain $d_T$ du transistor T est connecté sur l'entrée e- de l'amplificateur A, autrement dit, sur l'entrée de l'intégrateur I ; la grille $g_T$ du transistor T est connectée à une source de tension Vg.

Selon un mode de réalisation, le transistor T peut être un transistor NMOS, notamment si l'on veut intégrer le photocourant délivré par des photodiodes de type N sur un substrat P ou bien encore d'un microbolomètre résistif.

Selon un autre mode de réalisation, le transistor T peut être de type PMOS afin de traiter le photocourant délivré par des photodiodes de type P sur un substrat N ou bien encore d'un microbolomètre résistif.

L'amplificateur A, représenté sur cette figure 5, comporte une entrée différentielle (e- ; e+) ; toutefois, l'invention peut être utilisée avec d'autres types d'amplificateur de charge.

Le point de repos du transistor T est ajusté de façon à ce qu'il délivre, à l'entrée de l'amplificateur A, c'est-à-dire sur son drain $d_T$, un courant égal au courant Iinj injecté dans sa source $s_T$, par le bus Bpel.

Le potentiel du drain $d_T$ du transistor est égal à Vref, qui est la masse virtuelle de l'amplificateur différentiel A. La tension appliquée à la grille du transistor T est ajustée de façon à ce que le transistor soit en régime de saturation.

Le transistor T présente ainsi une très forte résistance drain-source ; de plus, son courant de drain $d_T$ est alors égal au courant injecté dans la source $s_T$ du transistor.

Par ailleurs, la capacité de sortie du transistor T est égale à la somme de la capacité grille-drain d'un transistor TMOS, en régime de saturation et de la capacité de sa jonction drain. Cette capacité est de l'ordre de grandeur de la capacité de sortie d'un seul PEL. Elle est donc très inférieure à la capacité du bus PEL. Dans ce mode de réalisation, les tensions Vg et Vref sont optimisées, afin d'assurer un fonctionnement en régime de saturation dans toute l'excursion d'entrée en courant, car le potentiel du bus PEL doit pouvoir varier, afin que le transistor T puisse développer une tension grille-source compatible avec l'intensité du courant injecté. De cette façon, la réponse en tension de l'intégrateur I, associé au dispositif d'adaptation d'impédance D, a une attaque en courant constant du bus PEL identique à celle d'un intégrateur déporté classique.

Sur la figure 6, on a représenté une courbe montrant la variation du potentiel du bus PEL en fonction du courant injecté dans le transistor T.

Sur cette figure, la courbe $Id_T$-$s_T$ montre le courant drain-source du transistor T ; les valeurs Iinj-max et Iinj-min sont, respectivement, les valeurs maximum et minimum du courant injecté sur la source $s_T$ du transistor T, et la valeur $V_T$ représente la tension de seuil du transistor T.

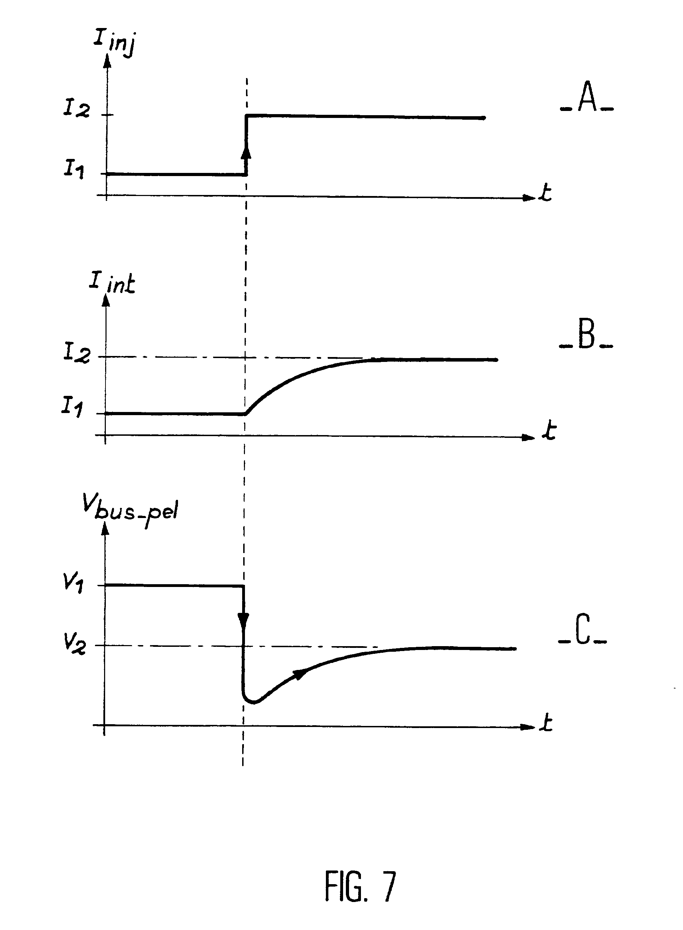

Par ailleurs, il faut noter que les PEL d'un senseur délivrent des photosignaux dont les niveaux varient de manière indépendante les uns des autres car les pixels de l'image auxquels ils sont associés ne sont, généralement, pas corrélés. Il faut donc que, dans le dispositif de l'invention, la réponse de l'intégrateur à une impulsion de courant d'amplitude et de durée variables soit identique à celle d'un intégrateur déporté classique. Pour montrer que cela est le cas, nous avons représenté sur la figure 7 différentes réponses de l'intégrateur.

La partie A de la figure 7 montre la réponse de l'intégrateur à l'injection d'un échelon de courant Iinj (I1, I2) sur le bus PEL. La partie B de la figure 7 montre que l'on obtient, soit en résolvant les équations de KIRCHOFF, soit en réalisant des simulations électriques appropriées, que le courant Iint injecté dans l'intégrateur suit la variation du courant Iinj avec un temps de réponse fini. La partie C de la figure 7 montre l'évolution temporelle du potentiel du bus PEL entre ces deux valeurs asymptotiques V1 et V2 que l'on détermine au moyen de la caractéristique courant-tension de la figure 6. La constante de temps $\tau$, qui régit ce régime transitoire, est donné par la formule :

$$\tau \approx gm/Cbus\_pel,$$

où gm est la transductance du transistor T.

Le courant intégré dans l'amplificateur de charge A n'est donc pas strictement égal à celui injecté sur le bus PEL, mais la différence entre les niveaux de sortie des deux dispositifs devient négligeable, dès lors que le temps de conversion Tconv est supérieur à $\tau$, ce qui est le cas dans la plupart des senseurs et, en particulier, dans les cas suivants :

- lorsque la capacité du bus PEL est capable de fournir des charges lors de la transition des courants beaucoup plus rapidement que le transistor T sur le front de montée du courant Iinj ;
- lorsqu'il n'y a pas de perte de charge sur le bus PEL, c'est-à-dire lorsque les jonctions des transistors TMOS, connectés au bus PEL, restent en inverse pendant tout le cycle de conversion ;
- lorsque le transistor T établit sa source à son potentiel final V2, avec sa constante de temps propre (voir figure 7C, illustrant la réponse à un échelon de courant).

Ces résultats peuvent être généralisés à la réponse à une impulsion de courant délivrée par un PEL sur le bus PEL. Dans le cas d'une impulsion de très courte durée, par rapport à $\tau$, la photocharge équivalente du PEL est tout d'abord stockée temporairement sur la capacité du bus PEL, puis elle est intégralement restituée sur le drain du transistor T. Là encore, il faut que les jonctions connectées au bus PEL restent en inverse pendant tout le processus de conversion en tension de l'information délivrée par le PEL.

Ainsi, bien que le dispositif de l'invention ne permette pas de délivrer à tout instant t un courant de sortie égal à son courant d'entrée, il conserve la charge entre son entrée et sa sortie, dès lors que le temps de conversion est supérieur au temps de réponse du dispositif et que la variation induite sur le bus PEL par l'impulsion de courant délivrée par chaque PEL ne fasse passer les jonctions qui lui sont connectées en inverse.

De plus, comme on l'a montré précédemment, la capacité de sortie de ce dispositif est très inférieure à celle du bus PEL, d'un circuit intégré de lecture dans un senseur matriciel.

Aussi, le dispositif d'adaptation d'impédance réalisé au moyen d'un transistor TMOS monté en grille commune répond donc aux caractéristiques énoncées précédemment et nécessaires à un bon fonctionnement d'un senseur d'images, à savoir une faible capacité de sortie et la délivrance sur son noeud de sortie d'une variation de charge strictement égale à celle développée sur le lieu d'entrée.

Du fait de ces caractéristiques, le bruit de conversion obtenu en sortie de l'intégrateur déporté associé à un dispositif d'adaptation d'impédance conforme à l'invention, est nettement réduit par rapport à l'intégrateur déporté classique, car le gain du montage non-inverseur est, dans le cas d'un intégrateur à entrée différentielle :

$$\frac{S}{Eplus} = \frac{Cmoins + Cconv}{Conv}$$

où Cmoins est la somme de la capacité de sortie du dispositif d'adaptation d'impédance et de la capacité d'entrée e- de l'amplificateur A. Cette relation permet de calculer le facteur de réduction de la valeur efficace du bruit de conversion entre un intégrateur déporté conventionnel et un intégrateur déporté selon l'invention (c'est-à-dire intégrateur déporté + dispositif d'adaptation d'impédance), dans le cas de bruits blancs :

$$\frac{\langle vbbs \_ conv \rangle_{conventionnel}}{\langle vbbs \_ conv \rangle_{amélioré}} = \frac{\sqrt{\dfrac{Cbus \_ pel + Cconv}{Cconv}}}{\sqrt{\dfrac{Cmoins + Cconv}{Cconv}}} = \sqrt{\frac{Cbus \_ pel + Cconv}{Cmoins + Cconv}}$$

Par exemple, dans le cas d'un senseur quantique infrarouge au format de 512 par 512 PEL, au pas de 20 $\mu$m, dédié à des applications d'imagerie sous faible flux d'entrée, l'ordre de grandeur de Cbus_pel est de 2.0 pF et celui de Cconv est d'environ 0.1 pF. En utilisant comme dispositif d'adaptation d'impédance un TMOS monté en grille commune, la capacité Cmoins peut être réduite à 0.1 pF. L'injection de ces valeurs dans la formule précédente montre que le bruit de conversion de l'intégrateur déporté de l'invention est trois fois inférieur à celui de l'intégrateur déporté conventionnel.

L'invention permet donc de réduire de manière significative le bruit de conversion dans le cas de bruits blancs. On montre aussi, par un raisonnement identique, que les composantes basses fréquences du bruit de l'amplificateur et de celui de la tension de référence sont atténuées de manière toute aussi significative grâce à ce dispositif.

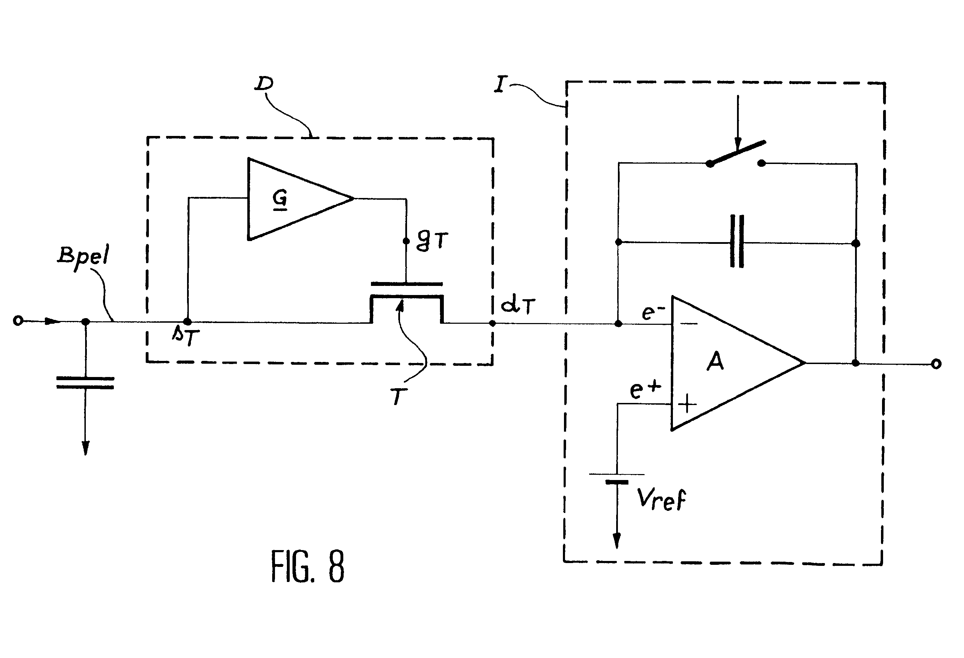

Le dispositif d'adaptation d'impédance peut être réalisé selon d'autres modes de réalisation. Par exemple, il peut être réalisé au moyen d'un transistor TMOS à grille commune, avec un amplificateur de contre réaction. En effet, il est possible d'améliorer encore certaines caractéristiques du premier mode de réalisation en contre-réactionnant la source du transistor T par un amplificateur G. Dans ce cas, l'amplificateur G est monté entre la grille $g_T$ du transistor T et la source $s_T$ du transistor T, comme montré sur la figure 8. L'introduction de cette contre-réaction a pour effet d'augmenter la transconductance d'entrée du transistor T, ce qui entraîne une réduction du temps de réponse à un échelon de courant.

Un tel dispositif peut être utilisé, par exemple, dans les circuits intégrés de lecture où les exigences sur les temps de conversion (c'est-à-dire le temps de lecture de l'information délivrée sur un PEL) et la réponse en tension de l'intégrateur déporté nécessitent de réduire le temps de réponse du dispositif d'adaptation d'impédance D situé en amont de l'intégrateur.

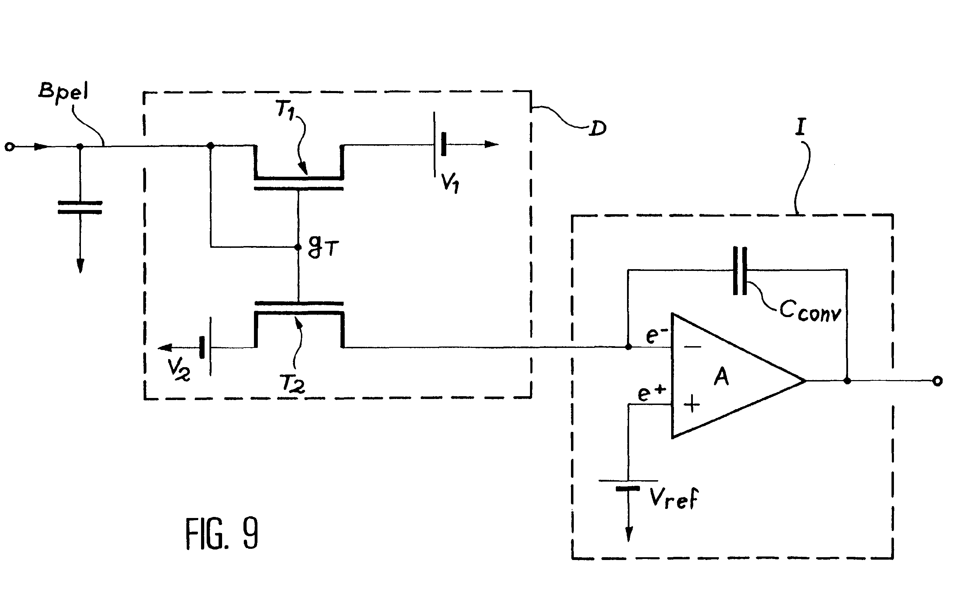

Le dispositif d'adaptation d'impédance peut également être réalisé au moyen d'un miroir de courant, comme représenté sur la figure 9.

Dans ce mode de réalisation, le dispositif d'adaptation d'impédance D est réalisé au moyen de deux transistors T1 et T2, associés chacun à une source de tension V1 et V2 et connectés l'un à l'autre par leur grille $g_T$ de façon à réaliser un miroir de courant. Ainsi, le dispositif de l'invention délivre en sortie un courant Iint qui est égal à son courant d'entrée Iinj multiplié par un facteur d'amplification qui est fonction du rapport de géométrie des transistors TMOS T1 et T2 et des tensions V1 et V2. Le gain en courant peut être inférieur ou supérieur à l'unité.

Le dispositif de l'invention, réalisé selon ce mode de réalisation, peut être utilisé dans des applications où il s'avère nécessaire de recadrer le courant délivré par le bus PEL dans l'excursion d'entrée de l'amplificateur de charge.

Le senseur d'images de l'invention permet donc d'obtenir un bruit de conversion inférieur à celui d'un senseur classique. La dynamique d'entrée en flux du senseur est ainsi augmentée, le bruit ramené à l'entrée du circuit intégré de lecture étant diminué.

Le dispositif de l'invention permet, de plus, d'obtenir une meilleure réponse en tension à la sortie de l'intégrateur déporté, en réduisant la capacité de conversion et en diminuant le bruit de conversion.

Ces améliorations permettent d'utiliser des CIL à intégrateurs déportés dans de nouvelles applications et, par exemple, en imagerie sous faible flux et/ou à faible temps d'intégration avec des senseurs quantiques, dont la photocharge équivalente est faible. De tels CIL peuvent également être utilisés dans des senseurs thermiques à microbolomètres résistifs à ébasage en courant déporté.

De façon plus générale, des dispositifs d'adaptation d'impédance selon l'invention peuvent aussi être associés à des intégrateurs déportés multicalibres (amplificateurs de charge disposant de plusieurs condensateurs sélectionnables dans sa boucle de contre réaction), afin d'effectuer une conversion adaptée au niveau du photosignal d'entrée.

De plus, à bruits de conversion constants et pour un format et un pas de PEL donnés, le dispositif de l'invention peut s'accommoder d'un niveau de bruit sur la tension de référence Vref supérieur à celui d'un intégrateur classique. Dans ces mêmes conditions, il peut également s'accommoder d'un niveau de bruits d'entrée de l'amplificateur de charge supérieur à celui d'un intégrateur déporté classique.

En outre, avec le dispositif de l'invention, le bruit de conversion n'est plus fonction de la capacité du bus PEL. Il est donc possible d'augmenter cette capacité sans accroître le bruit de conversion. Ceci ouvre de nombreuses possibilités, telles que l'augmentation du format du senseur, l'augmentation du pas du PEL, la possibilité d'augmenter le nombre de rangées multiplexées vers un même intégrateur, l'augmentation de la complexité du PEL ou encore l'augmentation du nombre des entrées et sorties du PEL.

**Revendications**

1. Senseur d'images à lecture matricielle comportant une matrice de photodétecteurs élémentaires (P) connectés par au moins un bus (Bpel) à un intégrateur déporté (I) convertissant le signal de chaque photodétecteur élémentaire en tension, **caractérisé en ce qu'**il comporte, entre l'extrémité du bus et l'entrée de l'intégrateur, un dispositif d'adaptation d'impédance (D) délivrant à sa sortie, pendant le temps de conversion d'un signal de photodétecteur, une variation de charge qui correspond à une fonction affine de la charge présente à l'entrée dudit dispositif d'adaptation, cette variation de charge étant déterminée par:

$$\int_{t=0}^{t=Tconv} Iinj(t) \cdot dt = \int_{t=0}^{t=Tconv} Iint(t) \cdot dt$$

où Iinj est le courant instantané du bus injecté à l'entrée du dispositif d'adaptation d'impédance, Iint est le courant instantané à l'entrée de l'intégrateur et Tconv est le temps de conversion, le dispositif d'adaptation d'impédance (D) ayant une capacité de sortie faible comparativement à la capacité du bus (Bpel).

2. Senseur d'images selon la revendication 1, **caractérisé en ce que** le dispositif d'adaptation d'impédance est connecté le plus près possible de l'entrée de l'intégrateur.

3. Senseur d'images selon l'une des revendications 1 ou 2, **caractérisé en ce que** le dispositif d'adaptation d'impédance comporte un transistor TMOS (T) monté en grille commune sur l'entrée de l'intégrateur.

4. Senseur d'images selon l'une quelconque des revendications 1 à 3, **caractérisé en ce que** le dispositif d'adaptation d'impédance comporte un transistor TMOS à grille commune (T) associé à un amplificateur de contre-réaction (G).

5. Senseur d'images selon la revendication 1, **caractérisé en ce que** le dispositif d'adaptation d'impédance comporte deux transistors (T1, T2) et deux sources de tension (V1, V2) montés en miroir de courant.

## Claims

1. An image sensor with matrix readout including a matrix of elementary photodetectors (P) connected through at least a bus (Bpel) to a remote integrator (I) converting the signal of each elementary photodetector into a voltage, **characterized in that** it includes, between the end of the bus and the input of the integrator, an impedance matching device (D) delivering at its output, during the time required for converting a photodetector signal, a variation of charge which corresponds to an affine function of the charge present at the input of said matching device,

$$\int_{t=0}^{t=Tconv} Iinj(t).dt = \int_{t=0}^{t=Tconv} I\,\text{int}(t).dt$$

wherein this variation of charge is determined by:

wherein Iinj is the instantaneous current of the bus, injected at the input of the impedance matching device, Iint is the instantaneous current at the input of the integrator and Tconv is the conversion time, the impedance matching device (V) having a low output capacitance as compared with the capacitance of the bus (Bpel).

2. The image sensor according to claim 1, **characterized in that** the impedance matching device is connected as close as possible to the input of the integrator.

3. The image sensor according to any of claims 1 or 2, **characterized in that** the impedance matching device includes a common-gate TMOS transistor (T) mounted on the input of the integrator.

4. The image sensor according to any of claims 1 to 3, **characterized in that** the impedance matching device includes a common-gate TMOS transistor (T) associated with a feedback amplifier (G).

5. The image sensor according to claim 1, **characterized in that** the impedance matching device includes two transistors (T1, T2) and two voltage sources (V1, V2) mounted as a current mirror.

## Patentansprüche

1. Bildsensor für Matrixauslesung, eine Matrix elementarer Photodetektoren (P) umfassend, die mit wenigstens einem Bus (Bpel) mit einem entfernten Integrator (I) verbunden sind, der das Signal jedes elementaren Photodetektors in Spannung umwandelt,
**dadurch gekennzeichnet, dass** er zwischen dem Ende des Busses und dem Eingang des Integrator eine Impedanzanpassungsvorrichtung (D) umfasst, die an ihrem Ausgang während der Umwandlungszeit eines Photodetektorsignals eine Ladungsvariation liefert, die einer affinen bzw. linearen Funktion der am Eingang der genannten Anpassungsvorrichtung präsenten Ladung entspricht, wobei diese Ladungsvariation bestimmt wird durch:

$$\int_{t=0}^{t=Tcon} \text{Iinj}(t) \cdot dt \ = \ \int_{t=0}^{t=Tconv} \text{Iint}(t) \cdot dt$$

wo Iinj der in den Eingang der Impedanzanpassungsvorrichtung eingespeiste Momentanstrom des Busses ist, Iint der Momentanstrom am Eingang des Integrators ist und Tconv die Umwandlungszeit ist, wobei die Impedanzanpassungsvorrichtung (D), verglichen mit der Kapazität des Busses (Bpel), eine schwache Ausgangskapazität hat.

2. Bildsensor nach Anspruch 1, **dadurch gekennzeichnet, dass** die Impedanzanpassungsvorrichtung dem Eingang des Integrators so nahe wie möglich angeschlossen ist.

3. Bildsensor nach einem der Ansprüche 1 oder 2, **dadurch gekennzeichnet, dass** die Impedanzanpassungsvorrichtung einen TMOS-Transistor (T) in Gateschaltung am Eingang des Integrators umfasst.

4. Bildsensor nach einem der Ansprüche 1 bis 3, **dadurch gekennzeichnet, dass** die Impedanzanpassungsvorrichtung einen TMOS-Transistor in Gateschaltung (T), verbunden mit einem Gegenkopplungsverstärker (G) umfasst.

5. Bildsensor nach Anspruch 1, **dadurch gekennzeichnet, dass** die Impedanzanpassungsvorrichtung zwei Transistoren (T1, T2) und zwei Spannungsquellen (V1, V2), als Stromspiegel geschaltet, umfasst.

FIG.1

FIG. 2

EP 1 146 732 B1

FIG. 3

FIG. 6

FIG. 4

FIG. 5

EP 1 146 732 B1

FIG. 7

FIG. 8

FIG. 9

EP 1 146 732 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2736782 A

**Littérature non-brevet citée dans la description**

*   *PATENT ABSTRACTS OF JAPAN,* 02 Juin 1988, vol. 012, 189 (E-616)

*   *Patent Abstract of Japan,* 15 Décembre 1987, vol. 11 (384